# EUROPÄISCHE PATENTSCHRIFT

(11) **EP 1 236 939 B1**
(45) Veröffentlichungstag und Bekanntmachung des Hinweises auf die Patenterteilung: **27.10.2004**
(21) Anmeldenummer: 01129580.5
(22) Anmeldetag: 12.12.2001
(51) Int. Cl.: F16K 11/078, F16K 31/60

(54) **Kartusche für eine Einhebelwasserarmatur**
Cartridge for a single control handle faucet
Cartouche d'un robinet à commande unique

(30) Priorität: 01.03.2001 DE 10110028
(43) Veröffentlichungstag der Anmeldung: 04.09.2002
(73) Patentinhaber: Kludi GmbH & Co. KG, 58706 Menden (DE)
(72) Erfinder: Katzer, Dieter, 49401 Damme (DE); Wiesendahl, Guido, 58313 Herdecke (DE); Kraus, Thomas, 58706 Menden (DE)
(74) Vertreter: COHAUSZ DAWIDOWICZ HANNIG & PARTNER

(56) Entgegenhaltungen:
- WO-A-96/26475
- DE-A- 2 757 525
- DE-A- 19 716 307
- US-A- 4 610 393
- US-A- 5 535 943

## Beschreibung

Die Erfindung betrifft eine Kartusche für eine Einhebelwasserarmatur mit einem oberen Hebel, der zur Mengenregulierung um eine waagerechte Achse verschwenkbar ist und um eine senkrechte zur Kartuschenachse axiale Achse verdrehbar ist, wobei durch das Verschwenken des Hebels eine waagerechte Steuerscheibe auf einer Einlassscheibe radial quer verschiebbar ist, um durch in der Steuerscheibe befindliche Ausnehmungen einen Kaltwasser-Einlass mit einem Kaltwasser-Auslass und einen Warmwasser-Einlass mit einem Warmwasser-Auslass der Einlassscheibe mehr oder weniger zu verbinden, so dass die Drehbewegung des Hebels um die senkrechte Achse von der Steuerscheibe entkoppelt und damit die Steuerscheibe durch den Hebel nur radial verschiebbar ist.

Es sind Einhebei-Wassermischarmaturen bekannt, deren Kartusche eine Keramik-Steuerscheibe aufweisen, die auf einer Keramik-Einlassscheibe durch einen Hebel verschiebbar ist, um einen Kaltwasser-Einlass und einen Warmwasser-Einlass mit einem Mischwasserauslass zu verbinden. Hierbei beeinflusst die Steuerscheibe sowohl das Mischverhältnis und damit die Temperatur als auch die Gesamtwassermenge. Bei dieser Kartuschenbauart kann es dazu kommen, dass Kaltwasser aus dem Kaltwasser-Einlass in den Warmwasser-Einlass zurückfließt und um dies zu verhindern, ist es aus der

WO 96/26475 bekannt, in der Kartusche die Funktion der Mengenregelung und die Funktion der Temperaturregelung voneinander zu trennen. Die Steuerscheibe sorgt hierbei nur noch für die Mengenregelung, in dem sie radial, das heißt quer zur Kartuschenachse durch ein Verschwenken des Kartuschenhebels bewegt wird. Ein Verdrehen des Kartuschenhebels um die Kartuschenachse bewegt dagegen eine mittige Kartuschenwelle, die durch die oberen Scheiben der Kartusche hindurch verläuft, bis zu einem unteren Thermostatventil, das durch ein Verdrehen der Welle gesteuert wird. Ein Verdrehen des Kartuschenhebels erzeugt aber auch ein Verdrehen der Steuerscheibe, so dass die Einlassscheibe über den gesamten Drehwinkelbereich bogenförmige Einlässe und Auslässe für Warmwasser und Kaltwasser aufweisen muss. Diese sehr langen bogenförmigen Einlässe und Auslässe führen zu Dichtungsproblemen auf der Rückseite der Einlassscheibe. Ferner ist es aus der DE 197 16 307 bekannt, eine radiale Verschieblichkeit durch eine aufwendige Konstruktion in Form eines glockenförmigen Ventilverschlussgliedes zu erreichen, das den Stößelbereich des Dehnstoffelementes übergreift.

Aufgabe der Erfindung ist es, eine Kartusche der eingangs genannten Art durch eine besonders einfache Konstruktion so zu verbessern, dass ein Verdrehen des Kartuschenhebels um die Kartuschenachse nicht zu einem Verdrehen der Steuerscheibe führt.

Diese Aufgabe wird erfindungsgemäß dadurch gelöst, dass zwischen der Steuerscheibe und dem Hebelende oder den Hebelenden, das/die mit der Steuerscheibe verbunden ist/sind, ein Drehteil angeordnet ist, wobei in das Drehteil das Hebelende/die Hebelenden eingreift/eingreifen, das Drehteil gegenüber der Steuerscheibe frei drehbar ist, das Drehteil durch das Hebelende/die Hebelenden radial verschieblich ist und das Drehteil die radiale Verschiebungsbewegung auf die Steuerscheibe überträgt.

Hierdurch können bei einfachster Konstruktion die Warm- und Kaltwasser-Einund Auslässe in der Einlassscheibe klein gehalten bleiben, da die Steuerscheibe sich nicht mehr dreht, sondern nur noch radial verschoben wird. Damit sind nur noch kleine Dichtflächen an der Rückseite der Einlassscheibe erfordert ich und es bauen sich an der Rückseite nur geringe Druckkräfte des Wassers durch die geringere resultierende Fläche auf. Hierbei ist die Konstruktion besonders einfach und preiswert in der Herstellung. Die Lebensdauer der Armatur ist wesentlich erhöht.

Besonders vorteilhaft ist es, wenn der obere Hebel zur Temperaturregelung um die senkrechte Achse verschwenkbar ist und durch das Verdrehen des Hebels ein das Mischverhältnis und damit die Temperatur bestimmendes Thermostatventil steuerbar ist, das mit dem Kaltwasser-Auslass, dem Warmwasser-Auslass und mit dem Mischwasserauslass der Armatur verbunden ist.

Vorzugsweise wird vorgeschlagen, dass das Drehteil eine in der Steuerscheibe oder in einem auf der Steuerscheibe befestigten Lagerteil frei drehbar gelagerte Kopplungsscheibe ist, in die oder an der das Hebelende/die Hebelenden eingreift/eingreifen.

Auch wird vorteilhafterweise vorgeschlagen, dass die Steuerscheibe und/oder das auf der Steuerscheibe befestigte Lagerteil in der Kartusche in radialer Richtung zwangsgeführt ist/sind. Ferner ist von Vorteil, wenn die Steuerscheibe und die darunter und darüber liegenden Scheiben eine mittige Öffnung aufweisen, durch die eine mittige Welle verläuft, an deren oberen Ende der Hebel zur Drehbetätigung der Welle befestigt ist. Hierbei kann der Hebel unten in einer Gabel enden, deren Schenkel eine um die senkrechte Achse verdrehbare Platte durchdringen und an der Platte angelenkt sind, und deren Schenkelenden an der Unterseite der Platte vorstehen, um in das Drehteil der Steuerscheibe oder des Lagerteils einzugreifen. Auch ist von Vorteil, wenn die Platte mit einer mittleren Öffnung am oberen Ende der Welle insbesondere formschlüssig befestigt ist.

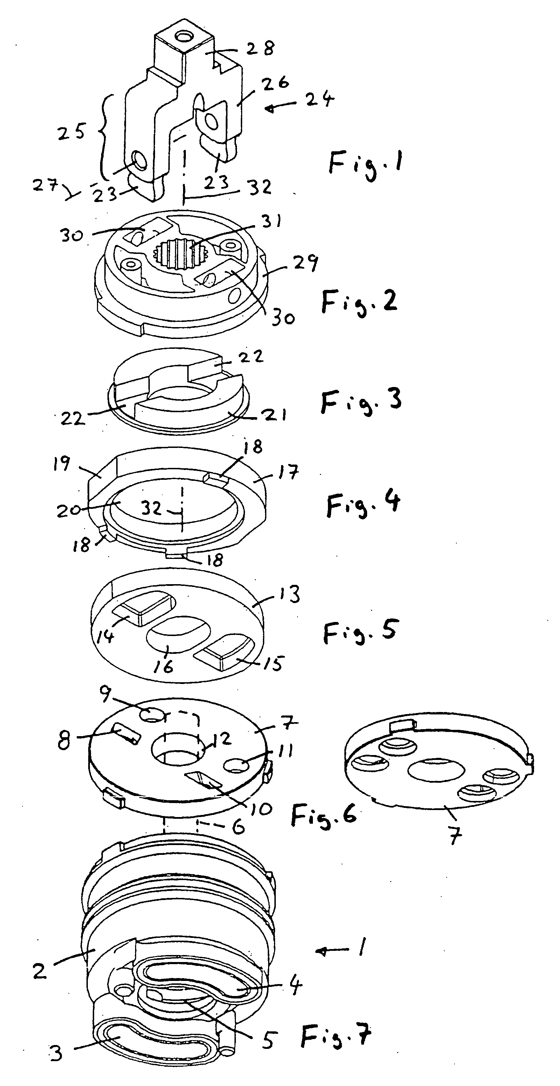

Ein Ausführungsbeispiel der Erfindung ist in der Zeichnung isometrisch in einer Explosionszeichnung dargestellt und wird im folgenden näher beschrieben. Es zeigen
- Fig. 1: den Kartuschenhebel,
- Fig. 2: die Lagerplatte, in der der Kartuschenhebel angelenkt ist,
- Fig. 3: ein ringförmiges Drehteil, in das der Kartuschenhebel eingreift,
- Fig. 4: ein ringförmiges Lagerteil, in dem das Drehteil gelagert ist,
- Fig. 5: eine Steuerscheibe, die an dem Lagerteil fest ist,
- Fig. 6: eine Einlassscheibe in Oberansicht und Unteransicht und
- Fig. 7: das Thermostatventil mit unterseitigen Einlässen und Auslass.

Die Kartusche weist im unteren Bereich ein Thermostatventil 1 auf, das innerhalb eines zylindrischen Gehäuses 2 angeordnet ist. Das Gehäuse 2 besitzt an seiner Unterseite eine Kaltwasser-Einlassöffnung 3, eine Warmwasser-Einlassöffnung 4 und eine Mischwasser-Auslassöffnung 5.

Aus dem Gehäuse 2 ragt an seiner Oberseite eine koaxiale senkrechte mittige Welle 6 heraus, durch deren Drehverstellen das Thermostatventil gesteuert wird. Die Welle 6 durchdringt alle über dem Gehäuse 2 liegenden Scheiben und Platten, die im folgenden beschrieben werden.

Auf der Oberseite des Gehäuses 2 des Thermostatventils liegt eine Einlassscheibe 7 aus Keramik, die gegenüber dem Gehäuse 2 unbeweglich und damit auch drehfest angeordnet ist. Die Scheibe 7 weist an ihrer Unterseite Einlass- und Auslassöffnungen auf, die mit entsprechenden Öffnungen an der Oberseite des Gehäuses 2 fluchten und zu folgenden Öffnungen an der Einlassscheiben-Oberseite führen: Ein Kaltwasser-Einlass 8, ein Kaltwasser-Auslass 9, ein Warmwasser-Einlass 10 und ein Warmwasser-Auslass 11. Ferner besitzt die Einlassscheibe 7 eine mittige Öffnung 12, durch die die Welle 6 verläuft.

Auf der Keramik-Einlassscheibe 7 liegt eine Keramik-Steuerscheibe 13 auf, die an ihrer Unterseite zwei taschenförmige Ausnehmungen 14, 15 diametral gegenüberliegend besitzt. Die Ausnehmung 14 verbindet bei geöffneter Armatur den Kaltwasser-Einlass und den Kaltwasser-Auslass und die Ausnehmung 15 den Warmwasser-Einlass mit dem Warmwasser-Auslass der Einlassscheibe 7. Hierbei ist die Steuerscheibe 13 nur radial verschieblich und zwar quer zu einer Verbindungslinie zwischen den beiden Ausnehmungen 14 und 15. Hierdurch ist sichergestellt, dass die Steuerscheibe 13 Kaltwasser und Warmwasser stets nur in derselben Menge hindurch lässt, das heißt bei kleiner Einstellung dieselbe kleine Menge Kaltwasser und Warmwasser und bei weiter geöffnetem Ventil dieselbe große Menge Kaltwasser und Warmwasser. Die auf der Einlassscheibe 7 verschiebliche Steuerscheibe 13 erzeugt somit nur eine reine Mengenregelung und keine Temperaturregelung.

In der Steuerscheibe 13 ist mittig eine Öffnung 16 angeordnet, durch die die Welle 6 verläuft und deren Form länglich ist, da die Steuerscheibe 13 sich quer bzw. radial zur Welle 6 bewegt. Auf der Oberseite der Steuerscheibe 13 ist ein ringförmiges Lagerteil 17 befestigt, das mit unteren Zapfen 18 in oberen Ausnehmungen der Steuerscheibe 13 einliegt, so dass Steuerscheibe 13 und Lagerteil 17 eine feste Einheit miteinander bilden. Das Lagerteil 17 ist radial verschieblich, aber nicht verdrehbar. Hierzu weist das Lagerteil 17 zwei seitliche Führungsflächen 19 auf, die an entsprechenden inneren Führungsflächen einer oberen Haube anliegen, die die oberen Teile der Kartusche überdeckt und nicht dargestellt ist. Da die Steuerscheibe 13 am Lagerteil 17 fest ist, kann auch die Steuerscheibe 13 nur radial bewegt aber nicht gedreht werden.

In der Öffnung 20 des ringförmiges Lagerteils 17 liegt ein ringförmiges Drehteil 21 ein, das im Lagerteil 17 verdrehbar gelagert ist. Das Drehteil 21 kann sich somit zum einen im Lagerteil 17 verdrehen und zum anderen mit dem Lagerteil 17 radial verschieben.

Das scheibenförmige Drehteil 21 weist dieselbe Höhe auf wie das Lagerteil 17 und besitzt an seiner Oberseite eine diametral verlaufende Nut, die auf beiden Seiten des Drehteils an seiner Oberseite zwei Ausnehmungen 22 bildet, in die jeweils ein Mitnehmerzapfen 23 eines Hebels 24 einliegen.

Der Hebel 24 bildet an seiner unteren Seite eine Gabel 25 mit zwei senkrechten Schenkeln 26, die unten in den Zapfen 23 enden. Die unteren Schenkelenden bzw. Mitnehmerzapfen 23 liegen in den Ausnehmungen 22 des Drehteils 21 ein, damit bei einem Verschwenken des Hebels 21 um eine waagerechte Achse 27 das Verschwenken ein radiales Verschieben des Drehteils 21 und damit auch der Teil 13 und 17 erzeugt. Der Hebel 24 endet oben in einem Zapfen 28, an dem der nicht dargestellte Armaturengriff befestigt ist.

Der Hebel 24 ist in einer Lagerplatte 29 derart gelagert, dass die beiden Schenkel 26 der Gabel 25 in zwei Öffnungen 30 und 31 der Platte 29 einliegen und hierbei die Platte durchdringen, so dass die Schenkelenden bzw. Mitnehmerzapfen 23 an der Unterseite der Platte 29 vorstehen, um in das Drehteil 21 eingreifen zu können. Die Lagerplatte 29 besitzt eine mittige, innen verzahnte Öffnung 31, in der das verzahnte obere Ende der Welle 6 formschlüssig einliegt. Ein Verdrehen der Platte 29 führt damit zu einem Verdrehen der Welle 6 und zu einem Verstellen des Thermostatventils 1.

Wird der Armaturengriff und damit der Hebel 24 um die senkrechte Achse 32 der Kartusche verdreht, so dreht sich die Lagerplatte 29 mit. Ferner wird hierdurch die Welle und das Drehteil 21 verdreht. Dagegen kommt es nicht zu einem Verdrehen des Lagerteils 17 und der Steuerscheibe 13.

Wird der Armaturengriff dagegen senkrecht verschwenkt, so kommt es zu einem Verschwenken des Hebels 24 um die Achse 27 und damit zu einem radialen Verschieben des Drehteils 21 und damit auch zu einem radialen Verschieben des Lagerteils 17 zusammen mit der Steuerscheibe 13. Somit wird ein senkrechtes Verschwenken von Armaturengriff und Hebel 24 auf die Steuerscheibe 13 übertragen, aber nicht ein Verdrehen von Armaturengriff und Hebel 24. Ein Verdrehen wird nur auf das Thermostatventil 1 über die Welle 6 übertragen.

Die Teile 7, 13, 17, 21 und 29 sind alle scheibenförmig und außen kreisrund. Die Teile 7 und 13 bestehen aus Keramik, während die übrigen Teile aus den verschiedensten Materialien insbesondere aus Kunststoff, Metall oder Keramik bestehen können.

In einem nicht dargestellten Ausführungsbeispiel fehlt das untere Thermostatventil oder ist durch ein anderes Teil ersetzt.

## Patentansprüche

1. Kartusche für eine Einhebelwasserarmatur mit einem oberen Hebel (24), derzur Mengenregutierung um eine waagerechte Achse (27) verschwenkbar ist und um eine senkrechte zur Kartuschenachse axiale Achse (32) verdrehbar ist, wobei durch das Verschwenken des Hebels (24) eine waagerechte Steuerscheibe (13) auf einer Einlassscheibe (7) radial quer verschiebbar ist, um durch in der Steuerscheibe befindliche Ausnehmungen (14, 15) einen Kaltwasser-Einlass (8) mit einem Kaltwasser-Auslass (9) und einen Warmwasser-Einlass (10) mit einem Warmwasser-Auslass (11) der Einlassscheibe (7) mehr oder weniger zu verbinden, so dass die Drehbewegung des Hebels (24) um die senkrechte Achse (32) von der Steuerscheibe (13) entkoppelt und damit die Steuerscheibe durch den Hebel nur radial verschiebbar ist, **dadurch gekennzeichnet, dass** zwischen der Steuerscheibe (13) und dem Hebelende oder den Hebelenden (23), das/die mit der Steuerscheibe verbunden ist/sind, ein Drehteil (21) angeordnet ist, wobei in das Drehteil das Hebelende/die Hebelenden (23) eingreift/eingreifen, das Drehteil (21) gegenüber der Steuerscheibe (13) frei drehbar ist, das Drehteil durch das Hebelende/die Hebelenden (23) radial verschieblich ist und das Drehteil die radiale Verschiebungsbewegung auf die Steuerscheibe überträgt.

2. Kartusche nach Anspruch 1, **dadurch gekennzeichnet, dass** der obere Hebel (24) zur Temperaturregelung um die senkrechte Achse (32) verschwenkbar ist und durch das Verdrehen des Hebels (24) ein das Mischverhältnis und damit die Temperatur bestimmendes Thermostatventil steuerbar ist, das mit dem Kaltwasser-Auslass (9), dem Warmwasser-Auslass (11) und mit dem Mischwasserauslass (5) der Armatur verbunden ist.

3. Kartusche nach Anspruch 1 oder 2, **dadurch gekennzeichnet, dass** das Drehteil (21) eine in der Steuerscheibe (13) oder in einem auf der Steuerscheibe befestigten Lagerteil (17) frei drehbar gelagerte Kopplungsscheibe ist, in die oder an der das Hebelende/die Hebelenden (23) eingreift/eingreifen.

4. Kartusche nach einem der vorherigen Ansprüche, **dadurch gekennzeichnet, dass** die Steuerscheibe (13) und/oder das auf der Steuerscheibe befestigte Lagerteil (17) in der Kartusche in radialer Richtung zwangsgeführt ist/sind.

5. Kartusche nach einem der vorherigen Ansprüche, **dadurch gekennzeichnet, dass** die Steuerscheibe (13) und die darunter und darüber liegenden Scheiben (7, 17, 21, 29) eine mittige Öffnung (12, 16, 20, 31) aufweisen, durch die eine mittige Welle (6) verläuft, an deren oberen Ende der Hebel (24) zur Drehbetätigung der Welle befestigt ist.

6. Kartusche nach Anspruch 5, **dadurch gekennzeichnet, dass** der Hebel (24) unten in einer Gabel (25) endet, deren Schenkel (26) eine um die senkrechte Achse verdrehbare Platte (29) durchdringen und an der Platte angelenkt sind, und deren Schenkelenden (23) an der Unterseite der Platte (29) vorstehen, um in das Drehteil (21) der Steuerscheibe (13) oder des Lagerteils (17) einzugreifen.

7. Kartusche nach Anspruch 6, **dadurch gekennzeichnet, dass** die Platte (29) mit einer mittleren Öffnung (31) am oberen Ende der Welle (6) insbesondere formschlüssig befestigt ist.

## Claims

1. A cartridge for a single control handle faucet with an upper lever (24) which can be pivoted about a horizontal axis (27) for the purpose of flow control and can be rotated about an axial axis (32) perpendicular to the cartridge axis, whereby a horizontal control disk (13) can be displaced radially across an inlet disk (7) by pivoting of the lever (24) in order to connect to a greater or lesser extent, by means of cut-outs (14, 15) in the control disk, a cold-water inlet (8) to a cold-water outlet (9) and a hot-water inlet (10) to a hot-water outlet (11) of the inlet disk (7), so that the rotary motion of the lever (24) about the vertical axis (32) is decoupled from the control disk (13) and hence the control disk can only be displaced radially by the lever, **characterized in that** between the control disk (13) and the lever end or ends (23) which is/are connected to the control disk there is arranged a rotary part (21), the lever end/ends (23) engaging in the rotary part, the rotary part (21) being freely rotatable in relation to the control disk (13), the rotary part being radially displaceable by means of the lever end/ends (23), and the rotary part transmitting the radial displacement motion to the control disk.

2. A cartridge according to claim 1, **characterized in that** the upper lever (24) can be rotated about the vertical axis (32) for the purpose of temperature regulation and that a thermostat valve determining the mixing ratio and thus the temperature can be controlled by rotation of the lever (24), said thermostat valve being connected with the cold-water outlet (9), the hot-water outlet (11) and the mixed water outlet (5) of the faucet.

3. A cartridge according to claim 1 or 2, **characterized in that** the rotary part (21) is a coupling disk mounted in a freely rotatable manner in the control disk (13) or in a mount (17) fastened on the control disk and into which or against which the lever end/ends (23) engage(s).

4. A cartridge according to any of the preceding claims, **characterized in that** the control disk (13) and/or the mount (17) fastened to the control disk is/are positively guided in the radial direction within the cartridge.

5. A cartridge according to any of the preceding claims, **characterized in that** the control disk (13) and the disks (7, 17, 21, 29) lying above and below it have a central opening (12, 16, 20, 31) through which runs a central shaft (6) at the upper end of which is fastened the lever (24) for rotary actuation of the shaft.

6. A cartridge accordingto claim 5, **characterized in that** the lever (24) terminates at its lower end in a fork (25), the arms (26) of which penetrate a plate (29) that can be rotated about the vertical axis and are hinged to the plate, the arm ends (23) of the fork projecting on the underside of the plate (29) in order to engage in the rotary part (21) of the control disk (13) or of the mount (17).

7. A cartridge according to claim 6, **characterized in that** the plate (29) is fastened to the upper end of the shaft (6), particularly in a form-locking manner, by means of a central opening (31).

## Revendications

1. Une cartouche d'un robinet à commande unique, dotée en sa partie supérieure d'un levier (24), qui peut basculer autour d'un axe (27) horizontal pour la régulation du débit et qui peut tourner autour d'un axe (32) vertical, axial par rapport à l'axe de la cartouche, cependant que le basculement du levier (24) permet de faire coulisser perpendiculairement, dans la direction radiale, un disque (13) de commande horizontal sur un disque (7) d'alimentation, afin que des évidements (14, 15), situés dans le disque de commande, relient plus ou moins une entrée (8) d'eau froide à une sortie (9) d'eau froide et une entrée (10) d'eau chaude à une sortie (11) d'eau chaude du disque (7) d'alimentation, de telle façon, que le mouvement de rotation du levier (24) autour de l'axe (32) vertical est déconnecté du disque (13) de commande et donc que le levier ne peut faire coulisser le disque de commande que radialement, **caractérisée en ce qu'** entre le disque (13) de commande et l'extrémité (23) (ou les extrémités) du levier reliée(s) au disque de commande est disposé un élément (21) rotatif, cependant que l'extrémité (23) (ou les extrémités) du levier a (ont) prise dans l'élément rotatif, l'élément (21) rotatif peut tourner librement par rapport au disque (13) de commande, l'extrémité (23) (ou les extrémités) du levier peut (peuvent) faire coulisser l'élément rotatif dans la direction radiale et l'élément rotatif transmet le mouvement de coulissement radial au disque de commande.

2. Une cartouche selon la revendication n° 1, **caractérisée en ce que** le levier (24) dans la partie supérieure peut basculer autour de l'axe (32) vertical pour réguler la température et la rotation du levier (24) permet de commander une soupape thermostatique, qui détermine la température et qui est reliée à la sortie (9) d'eau froide, à la sortie (11) d'eau chaude et à la sortie (5) d'eau mitigée du robinet.

3. Une cartouche selon la revendication n° 1 bu n° 2, **caractérisée en ce que** l'élément (21) rotatif est un disque d'embrayage, qui est guidé de façon à pouvoir tourner librement dans le disque (13) de commande, ou dans un élément (17) de guidage fixé sur le disque de commande, et qui donne prise à l'extrémité (23) (ou aux extrémités) du levier.

4. Une cartouche selon une des revendications précédentes, **caractérisée en ce qu'**à l'intérieur de la cartouche, le disque (13) de commande (et/ou l'élément (17) de guidage fixé sur le disque de commande) est (sont) soumis à un guidage forcé dans la direction radiale.

5. Une cartouche selon une des revendications précédentes, **caractérisée en ce que** le disque (13) de commande, ainsi que les disques (7, 17, 21, 29) disposés sous et au-dessus de lui, présentent un orifice (12, 16, 20, 31) médian, par lequel passe un arbre (6) médian, en l'extrémité supérieure duquel est fixé le levier (24) de commande de la rotation de l'arbre.

6. Une cartouche selon la revendication n° 5, **caractérisée en ce que** le levier (24) se termine en son extrémité inférieure par une fourche (25), dont les bras (26) pénètrent au travers d'une plaque (29), qui peut tourner autour de l'axe vertical, et sont articulés au niveau de la plaque et dont les extrémités (23) des bras sont protubérantes par rapport à la face inférieure de la plaque (29), de façon à prendre dans l'élément (21) rotatif du disque (13) de commande ou de l'élément (17) de guidage.

7. Une cartouche selon la revendication n° 6, **caractérisée en ce que** la plaque (29) est fixée en un orifice (31) médian sur l'extrémité supérieure de l'arbre (6), en particulier par fixation géométrique.
